# EUROPEAN PATENT SPECIFICATION

(11) **EP 3 711 978 B1**
(45) Date of publication and mention of the grant of the patent: **15.09.2021**
(21) Application number: 20162841.9
(22) Date of filing: 12.03.2020
(51) Int. Cl.: B60C 9/20, B60C 9/22

(54) **HEAVY DUTY PNEUMATIC TIRE**
SCHWERLASTLUFTREIFEN
PNEUMATIQUE POUR FONCTIONNEMENT INTENSIF

(30) Priority: 18.03.2019 JP 2019049686
(43) Date of publication of application: 23.09.2020
(73) Proprietor: Sumitomo Rubber Industries, Ltd., Kobe-shi, Hyogo-ken 651-0072 (JP)
(72) Inventor: TAKEMOTO, Yoshiaki, Kobe-shi, Hyogo-ken, 651-0072 (JP)
(74) Representative: Manitz Finsterwald Patent- und Rechtsanwaltspartnerschaft mbB

(56) References cited:
- EP-A2- 1 813 444
- WO-A1-2008/010379
- WO-A1-2012/017399
- DE-A1-102012 112 451
- JP-A- H0 569 702
- JP-A- H1 120 405
- JP-A- H05 131 808

## Description

### BACKGROUND OF THE INVENTION

### Field of the Invention

The present invention relates to a heavy duty pneumatic tire.

### Description of the Background Art

In a tire, a belt and a band are provided between a tread and a carcass. The belt is composed of a plurality of layers. Each layer includes a large number of belt cords aligned with each other. Normally, a steel cord is used as the belt cord. The band includes a helically wound band cord. A steel cord or a cord formed from an organic fiber such as nylon fibers is used as the band cord. In the tire, the stiffness of the tread part is controlled by adjusting the configuration of the belt or the band (for example, Japanese Laid-Open Patent Publication No. H9-105084).

WO 2012/017399 A1 discloses a tire according to the preamble of claim 1. Other tires having a belt composed of a plurality of layers are respectively disclosed in WO 2008/010379 A1, JP HI 1-020405 A, JP H05-069702 A, EP 1 813 444 A2 and JP H05-131808 A.

### SUMMARY OF THE INVENTION

A heavy duty pneumatic tire (hereinafter, tire) is mounted to a vehicle such as a truck or a bus. The internal pressure of the tire is high, and a large load acts on the tire. The belt of the tire is composed of three or four layers from the viewpoint of ensuring the stiffness of the tread part.

In manufacture of a tire, a tire in an uncrosslinked state (hereinafter, green tire) is prepared by combining members such as a tread and sidewalls. The green tire is placed in a mold, and pressed from inside against the mold. At this time, the green tire is stretched in the circumferential direction. While the belt is required to have a high stiffness from the viewpoint of ensuring the stiffness of the tread part, the belt is required to be stretchable to some extent during formation of the tire.

As for vehicles, reduction of the height of the vehicle floor and improvement of the carrying capacity are promoted. In tires, reduction of flattening and improvement of load capacity are required.

In a low flatness tire that has an aspect ratio of not greater than 65, the shoulder portions tend to bulge in a running state, and the ground-contact pressure at shoulder land portions tend to be increased. In the tire, occurrence of uneven wear such as step wear and shoulder wear is a cause for concern. Uneven wear causes changes not only in the appearance of the tire but also in the ground-contact pressure distribution of the tire, thus influencing running performance and durability.

For example, if the thickness at the tire equator of the tread is increased, increase in the ground-contact pressure at shoulder land portions can be suppressed. Use of a thick tread contributes to improvement of uneven wear resistance. Meanwhile, a thick tread causes increase in the mass of the tire. Thus, increase in the rolling resistance becomes a concern. Thus, a technology that can ensure formability and improve uneven wear resistance by controlling the stiffness of the tread part is desired to be established.

The present invention has been made in consideration of these circumstances. An object of the present invention is to provide a heavy duty pneumatic tire in which formability is ensured and uneven wear resistance is improved.

A heavy duty pneumatic tire according to one mode of the present invention is a heavy duty pneumatic tire having a nominal aspect ratio of not greater than 65. The tire includes: a tread having not less than three circumferential grooves aligned with each other in an axial direction; a belt positioned inward of the tread in a radial direction and including a large number of belt cords made of metal, the belt cords being aligned with each other; and a pair of edge bands, each edge band being positioned between the tread and the belt in the radial direction and including a band cord made of metal and helically wound. Of the not less than three circumferential grooves, circumferential grooves that are positioned on outer sides in the axial direction are each a shoulder circumferential groove. The belt is composed of a plurality of layers layered in the radial direction, a layer, out of the layers, that is close to the tread is a first layer, and a layer, out of the layers, that is positioned inward of the first layer in the radial direction is a second layer. Each shoulder circumferential groove is positioned between an end of the first layer and an end of the second layer in the axial direction. The edge band is layered on an end portion of the second layer. An inner end of the edge band is positioned outward of the end of the first layer in the axial direction. The edge band overlaps the shoulder circumferential groove in the radial direction.

In the heavy duty pneumatic tire, the inner end of the edge band is positioned inward of an inner edge of the shoulder circumferential groove in the axial direction. A distance in the axial direction from the inner edge of the shoulder circumferential groove to the inner end of the edge band is between 3 mm and 7 mm.

Preferably, in the heavy duty pneumatic tire, an elongation at break of the band cord is not lower than 1% and not higher than 6%.

Preferably, in the heavy duty pneumatic tire, an outer end of the edge band is positioned inward of the end of the second layer in the axial direction.

Preferably, the heavy duty pneumatic tire further comprises edge members, each edge member being composed of four rubber layers, wherein the end portion of the second layer and an end portion of a third layer are each covered with one of the rubber layers, and wherein two rubber layers are disposed between the end portion of the second layer and the end portion of the third layer.

In the heavy duty pneumatic tire of the present invention, formability is ensured and improvement of uneven wear resistance is achieved.

### BRIEF DESCRIPTION OF THE DRAWINGS

FIG. 1 is a cross-sectional view showing a part of a heavy duty pneumatic tire according to an embodiment of the present invention; and
FIG. 2 is an enlarged cross-sectional view showing a part of the tire shown in FIG. 1.

### DESCRIPTION OF THE PREFERRED EMBODIMENTS

The following will describe in detail the present invention based on preferred embodiments with appropriate reference to the drawings.

In the present invention, a state in which: a tire is mounted to a normal rim; the internal pressure of the tire is adjusted to a normal internal pressure; and no load is applied to the tire, is referred to as a normal state. In the present invention, the dimensions and angles of the components of the tire are measured in the normal state, unless otherwise specified.

The normal rim represents a rim that is specified according to the standard with which the tire complies. The "standard rim" in the JATMA standard, the "Design Rim" in the TRA standard, and the "Measuring Rim" in the ETRTO standard are included in the normal rim.

The normal internal pressure represents an internal pressure that is specified according to the standard with which the tire complies. The "maximum air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are included in the normal internal pressure.

A normal load refers to a load specified in the standard with which the tire complies. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are included in the normal load.

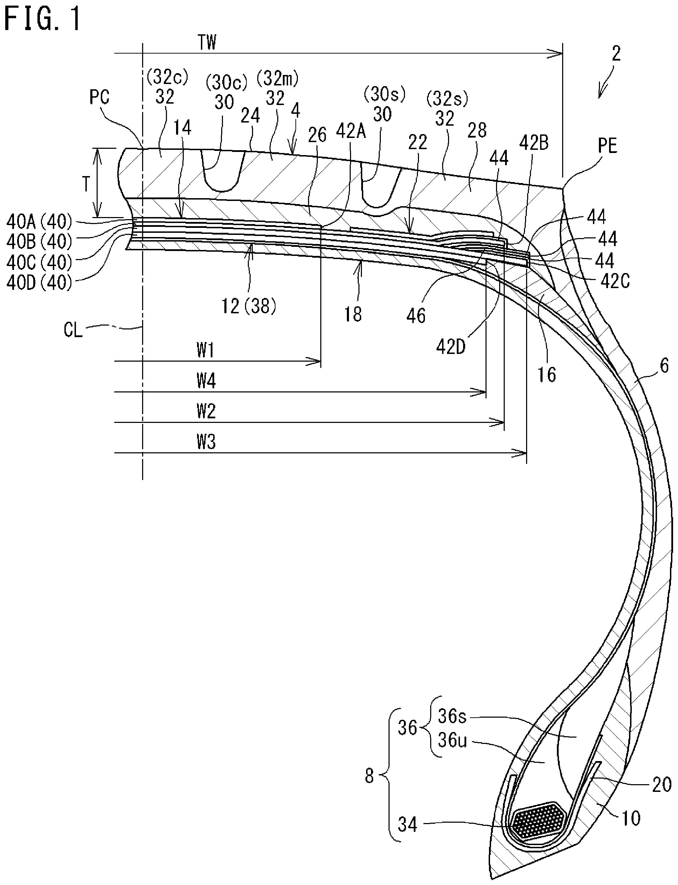

FIG. 1 shows a part of a heavy duty pneumatic tire 2 (hereinafter, sometimes simply referred to as "tire 2") according to an embodiment of the present invention. The tire 2 is mounted to a vehicle such as a truck or a bus. The nominal aspect ratio of the tire 2 is not greater than 65. The tire 2 is a low flatness tire.

FIG. 1 shows a part of a cross section of the tire 2, taken along a plane that contains the rotation axis of the tire 2. In FIG. 1, the right-left direction represents the axial direction of the tire 2, and the up-down direction represents the radial direction of the tire 2. The direction perpendicular to the surface of the sheet of FIG. 1 represents the circumferential direction of the tire 2. In FIG. 1, an alternate long and short dash line CL represents the equator plane of the tire 2.

The tire 2 includes a tread 4, a pair of sidewalls 6, a pair of beads 8, a pair of chafers 10, a carcass 12, a belt 14, a pair of cushion layers 16, an inner liner 18, a pair of steel reinforcing layers 20, and a pair of edge bands 22.

The tread 4 comes into contact with the road surface at the outer surface thereof. The outer surface is a tread surface 24. In FIG. 1, reference character PC represents the intersection between the tread surface 24 and the equator plane. The intersection PC represents the equator of the tire 2. A double-headed arrow T represents the thickness of the tread 4 at the equator PC. The thickness T is represented by the distance in the radial direction from the outer surface of the belt 14 to the equator PC measured along the equator plane.

In FIG. 1, reference character PE represents each end of the tread surface 24. A double-headed arrow TW represents the width of the tread surface 24. The width TW is represented by the distance in the axial direction from one end PE of the tread surface 24 to the other end PE of the tread surface 24. In the tire 2, when the ends PE of the tread surface 24 cannot be identified from the appearance, the outer ends in the axial direction of a ground-contact surface obtained when the normal load is applied to the tire 2 in the normal state such that the tire 2 is brought into contact with a plane at a camber angle of 0° are defined as the ends PE of the tread surface 24.

The tread 4 includes a base portion 26, and a cap portion 28 positioned outward of the base portion 26 in the radial direction. The base portion 26 is formed from a crosslinked rubber having low heat generation property. The cap portion 28 is formed from a crosslinked rubber for which wear resistance and grip performance are taken into consideration. As shown in FIG. 1, the base portion 26 covers the entirety of the belt 14. The cap portion 28 covers the entirety of the base portion 26.

In the tire 2, not less than three circumferential grooves 30 aligned with each other in the axial direction are formed in the tread 4. In other words, the tread 4 has not less than three circumferential grooves 30 aligned with each other in the axial direction. These circumferential grooves 30 extend continuously in the circumferential direction. In the tire 2 shown in FIG. 1, four circumferential grooves 30 are formed in the tread 4.

Of the four circumferential grooves 30, circumferential grooves 30 that are positioned on the inner side in the axial direction, i.e., circumferential grooves 30 that are close to the equator PC, are center circumferential grooves 30c. Circumferential grooves 30 that are positioned at the outermost side in the axial direction, i.e., circumferential grooves 30 that are close to the ends PE of the tread surface 24, are shoulder circumferential grooves 30s. When the circumferential grooves 30 formed in the tread 4 include a circumferential groove that is positioned on the equator PC, the circumferential groove positioned on the equator PC is the center circumferential groove. Further, when a circumferential groove is present between the center circumferential groove 30c and the shoulder circumferential groove 30s, this circumferential groove is a middle circumferential groove.

In the tire 2, from the viewpoint of contribution to drainage performance and traction performance, the width in the axial direction of the center circumferential groove 30c is preferably about 2 to 10% of the width TW of the tread surface 24 (hereinafter, tread surface width TW). The depth of the center circumferential groove 30c is preferably 13 to 25 mm. The width in the axial direction of the shoulder circumferential groove 30s is preferably about 1 to 7% of the tread surface width TW. The depth of the shoulder circumferential groove 30s is preferably 13 to 25 mm.

As described above, not less than three circumferential grooves 30 are formed in the tread 4. Accordingly, not less than four land portions 32 are formed in the tread 4. These land portions 32 are aligned with each other in the axial direction, and extend continuously in the circumferential direction. In the tire 2 shown in FIG. 1, since four circumferential grooves 30 are formed in the tread 4, five land portions 32 are formed.

Of the five land portions 32, a land portion 32 that is positioned on the inner side in the axial direction, i.e., the land portion 32 that is positioned on the equator PC, is a center land portion 32c. Land portions 32 that are positioned on the outermost side in the axial direction, i.e., land portions 32 that include the ends PE of the tread surface 24, are each a shoulder land portion 32s. A land portion 32 that is positioned between the center land portion 32c and the shoulder land portion 32s is a middle land portion 32m. When, of the land portions 32 formed in the tread 4, the land portion that is positioned on the inner side in the axial direction is not positioned at the equator PC but is positioned close to the equator PC, this land portion positioned close to the equator PC, i.e., the land portion positioned on the equator PC side, is the center land portion.

In the tire 2, the width in the axial direction of the center land portion 32c is set in a range of not lower than 10% and not higher than 18% of the tread surface width TW. The width in the axial direction of the middle land portion 32m is set in a range of not lower than 10% and not higher than 18% of the tread surface width TW. The width in the axial direction of the shoulder land portion 32s is set in a range of not lower than 15% and not higher than 25% of the tread surface width TW.

Each sidewall 6 is connected to a corresponding end of the tread 4. The sidewall 6 extends inward from the end of the tread 4 in the radial direction. The sidewall 6 is formed from a crosslinked rubber.

Each bead 8 is positioned inward of a corresponding sidewall 6 in the radial direction. The bead 8 includes a core 34 and an apex 36.

The core 34 extends in the circumferential direction. The core 34 includes a wound steel wire. The core 34 has a substantially hexagonal cross-sectional shape.

The apex 36 is positioned outward of the core 34 in the radial direction. The apex 36 includes an inner apex 36u and an outer apex 36s. The inner apex 36u extends outward from the core 34 in the radial direction. The outer apex 36s is positioned outward of the inner apex 36u in the radial direction. The inner apex 36u and the outer apex 36s are each formed from a crosslinked rubber. The outer apex 36s is softer than the inner apex 36u.

Each chafer 10 is positioned outward of a corresponding bead 8 in the axial direction. The chafer 10 is positioned inward of the sidewall 6 in the radial direction. The chafer 10 comes into contact with a rim (not shown). The chafer 10 is formed from a crosslinked rubber.

The carcass 12 is positioned inward of the tread 4, the sidewalls 6, and the chafers 10. The carcass 12 includes at least one carcass ply 38. The carcass 12 of the tire 2 is composed of one carcass ply 38. In the tire 2, the carcass ply 38 is turned up around each core 34 from the inner side toward the outer side in the axial direction.

Although not shown, the carcass ply 38 includes a large number of carcass cords aligned with each other. The carcass cords are covered with a topping rubber. Each carcass cord intersects the equator plane. In the tire 2, the angle of the carcass cord relative to the equator plane is not less than 70° and not greater than 90°. The carcass 12 has a radial structure. In tire 2, a steel cord is used as the carcass cord.

The belt 14 is positioned inward of the tread 4 in the radial direction. The belt 14 is positioned outward of the carcass 12 in the radial direction.

The belt 14 is composed of a plurality of layers 40 layered in the radial direction. The belt 14 of the tire 2 is composed of four layers 40. In the tire 2, the number of the layers 40 forming the belt 14 is not particularly limited. The configuration of the belt 14 is determined as appropriate in consideration of the specifications of the tire 2.

Although not shown, each layer 40 includes a large number of belt cords aligned with each other. The belt cords are covered with a topping rubber. Each belt cord is inclined relative to the equator plane. In the tire 2, the belt 14 is configured such that the belt cords of one layer 40 intersect the belt cords of another layer 40 layered on the one layer 40. Each belt cord is made of metal. Examples of the metal belt cord include a steel cord.

In the tire 2, of the four layers 40 layered in the radial direction, the layer 40 that is close to the tread is a first layer 40A. The layer 40 that is positioned inward of the first layer 40A in the radial direction is a second layer 40B. The layer 40 that is positioned inward of the second layer 40B in the radial direction is a third layer 40C. The layer 40 that is positioned inward of the third layer 40C in the radial direction is a fourth layer 40D.

In the tire 2, of the four layers 40, the first layer 40A positioned on the outermost side in the radial direction has the smallest width in the axial direction. The third layer 40C positioned between the second layer 40B and the fourth layer 40D has the largest width in the axial direction. As shown in FIG. 1, an end 42A of the first layer 40A is positioned, in the axial direction, between the center circumferential groove 30c and the shoulder circumferential groove 30s. An end 42D of the fourth layer 40D is positioned outward of the shoulder circumferential groove 30s in the axial direction. An end 42B of the second layer 40B is positioned outward of the end 42D of the fourth layer 40D in the axial direction.

In FIG. 1, a double-headed arrow W1 represents the width in the axial direction of the first layer 40A. The width W1 in the axial direction is represented by the distance in the axial direction from one end 42A to the other end 42A of the first layer 40A. A double-headed arrow W2 represents the width in the axial direction of the second layer 40B. The width W2 in the axial direction is represented by the distance in the axial direction from one end 42B to the other end 42B of the second layer 40B. A double-headed arrow W3 represents the width in the axial direction of the third layer 40C. The width W3 in the axial direction is represented by the distance in the axial direction from one end 42C to the other end 42C of the third layer 40C. A double-headed arrow W4 represents the width in the axial direction of the fourth layer 40D. The width W4 in the axial direction is represented by the distance in the axial direction from one end 42D to the other end 42D of the fourth layer 40D.

In the tire 2, from the viewpoint of ensuring the stiffness of the tread 4 portion, the ratio of the width W1 in the axial direction of the first layer 40A to the tread surface width TW is preferably not less than 0.25 and preferably not greater than 0.65. The ratio of the width W2 in the axial direction of the second layer 40B to the tread surface width TW is preferably not less than 0.80 and preferably not greater than 0.90. The ratio of the width W3 in the axial direction of the third layer 40C to the tread surface width TW is preferably not less than 0.85 and preferably not greater than 0.95. The ratio of the width W4 in the axial direction of the fourth layer 40D to the tread surface width TW is preferably not less than 0.75 and preferably not greater than 0.85.

In the tire 2, each end 42B portion of the second layer 40B (hereinafter, end portion of the second layer 40B), and each end 42C portion of the third layer 40C (hereinafter, end portion of the third layer 40C) are each covered with a rubber layer 44. Further, two rubber layers 44 are disposed between the end portion of the second layer 40B and the end portion of the third layer 40C which are each covered with the rubber layer 44. The tire 2 has edge members 46. Each edge member 46 is composed of the four rubber layers 44 in total and is formed between the end portion of the second layer 40B and the end portion of the third layer 40C. As a result, the end portion of the second layer 40B is raised outward in the radial direction, and is disposed so as to be separated from the end portion of the third layer 40C. The edge member 46 is formed from a crosslinked rubber.

Each cushion layer 16 is positioned between the belt 14 and the carcass 12, at the portion of a corresponding end of the belt 14, i.e., at the end portion of the belt 14. The cushion layer 16 is formed from a crosslinked rubber.

The inner liner 18 is positioned inward of the carcass 12. The inner liner 18 forms the inner surface of the tire 2. The inner liner 18 is formed from a crosslinked rubber that is excellent in air blocking property. The inner liner 18 maintains the internal pressure of the tire 2.

Each steel reinforcing layer 20 is positioned at a corresponding bead 8 portion. The steel reinforcing layer 20 is turned up, along the carcass ply 38, around the core 34 from the inner side toward the outer side in the axial direction.

Although not shown, the steel reinforcing layer 20 includes a large number of filler cords aligned with each other. In the steel reinforcing layer 20, the filler cords are covered with a topping rubber. In the tire 2, a steel cord is used as the filler cord.

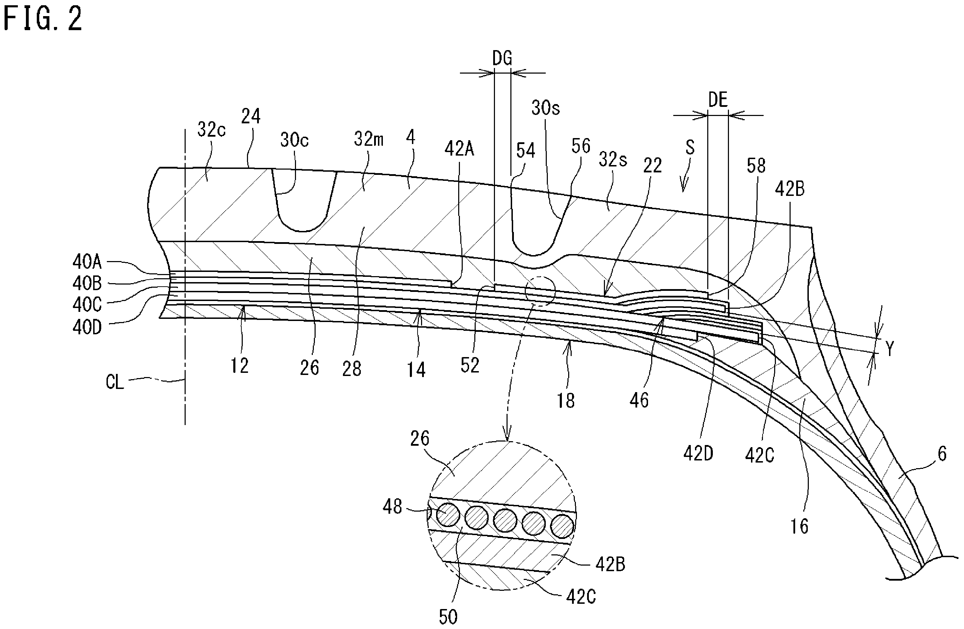

FIG. 2 shows a part of a cross section of the tire 2 shown in FIG. 1. In FIG. 2, the right-left direction represents the axial direction of the tire 2, and the up-down direction represents the radial direction of the tire 2. The direction perpendicular to the surface of the sheet in FIG. 2 represents the circumferential direction of the tire 2.

In the tire 2, the pair of edge bands 22 are disposed so as to be separated from each other in the axial direction with respect to the equator plane. Each edge band 22 is positioned, in the radial direction, between the tread 4 and the belt 14. In the tire 2, the edge band 22 covers the end portion of the belt 14.

As shown in FIG. 2, the edge band 22 includes a band cord 48. The band cord 48 is covered with a topping rubber 50. The band cord 48 is made of metal. Examples of the metal band cord 48 include a steel cord. When a steel cord is used as the band cord 48, the outer diameter of the steel cord is preferably not less than 1 mm and not greater than 2 mm.

In the tire 2, the band cord 48 is helically wound. The edge band 22 includes the helically wound band cord 48. The edge band 22 has a jointless structure. The angle of the band cord 48 relative to the circumferential direction is preferably not greater than 5°, and more preferably not greater than 2°. The band cord 48 extends substantially in the circumferential direction. In the tire 2, the outer diameter of the loop of the helically wound band cord 48 is preferably set in a range of not lower than 90% and not higher than 97% of the outer diameter of the tire.

In the tire 2, the density of the band cord 48 in the edge band 22 is set in a range of not less than 15 ends/5 cm and not greater than 25 ends/5 cm. The density of the band cord 48 is represented by the number in a cross section of the band cord 48 included in a width of 5 cm of the edge band 22.

In the tire 2, in the axial direction, the shoulder circumferential groove 30s is positioned between the end 42A of the first layer 40A and the end 42B of the second layer 40B. As shown in FIG. 2, the edge band 22 is layered on the end portion of the second layer 40B protruding outward in the axial direction from the end 42A of the first layer 40A. In addition, the edge band 22 is disposed such that an inner end 52 of the edge band 22 is positioned outward of the end 42A of the first layer 40A in the axial direction, and the edge band 22 overlaps the shoulder circumferential groove 30s in the radial direction.

As described above, the edge band 22 has a jointless structure. The edge band 22 holds the end portion, of the belt 14, in the vicinity of the shoulder circumferential groove 30s. In the tire 2, in a running state, rising-up of the end portion of the belt 14 outward in the radial direction is suppressed. Thus, the outer diameter of the tire 2 in a shoulder portion S is appropriately maintained. In the tire 2, since a local increase in the ground-contact pressure in the shoulder land portion 32s is suppressed, uneven wear such as step wear and shoulder wear is less likely to be caused. The edge band 22 contributes to improvement of uneven wear resistance.

As described above, the nominal aspect ratio of the tire 2 is not greater than 65. In the tire 2, in a running state, rising-up of the end portion of the belt 14 could easily occur. However, as described above, in the tire 2, the edge band 22 having a jointless structure holds the end portion, of the belt 14, in the vicinity of the shoulder circumferential groove 30s. Thus, rising-up of the end portion of the belt 14 is effectively suppressed.

For example, with respect to a tire 2 having a tire size of 385/55R22.5, the ground-contact shape of the tire 2 after dimensional growth has been investigated.

The tire 2 after dimensional growth is prepared by causing a new tire 2 to run 1000 km at a speed of 80 km/h on a drum tester. The tire 2 is mounted on the normal rim, with the internal pressure being adjusted to the normal internal pressure. A load of 85% of the normal load is applied on the running tire 2.

In this investigation, the following index F and index D have been confirmed. The index F is an index represented by the ratio of, in the contour shape of the ground-contact surface, the ground-contact length at a position corresponding to the equator plane of the tire, relative to the ground-contact length at a position separated from the position corresponding to the equator plane by a distance in the axial direction of 70% of the maximum half-width of the ground-contact surface. The index D is an index represented by the ratio of, in the contour shape of the ground-contact surface, the ground-contact length at a position separated from the position corresponding to the equator plane of the tire by a distance in the axial direction of 97% of the maximum half-width of the ground-contact surface, relative to the ground-contact length at the position separated from the position corresponding to the equator plane of the tire by the distance in the axial direction of 70% of the maximum half-width of the ground-contact surface. The index F and the index D have been identified on the basis of a ground-contact surface obtained by: mounting the tire 2 after dimensional growth to the normal rim; adjusting the internal pressure to the normal internal pressure; and bringing the tire 2 into contact with a plane, with the normal load being applied to the tire 2.

Through the investigation above, with respect to the tire 2, it has been confirmed that the index F is in a range of not less than 1.05 and not greater than 1.15, and the index D is in a range of not less than 0.95 and not greater than 1.05. In a conventional tire not provided with the edge band 22, the index F is in a range of not less than 0.75 and not greater than 1.05, and the index D is in a range of not less than 1.05 and not greater than 2.00. Also from this, it is apparent that the edge band 22 effectively suppresses rising-up of the end portion of the belt 14. The edge band 22 effectively contributes to improvement of uneven wear resistance, particularly in a tire 2 that has a nominal aspect ratio of not greater than 65.

In the tire 2, a band that has a jointless structure is not provided between the right and left edge bands 22. In the manufacture of the tire 2, a tire in an uncrosslinked state, i.e., a green tire, placed in a mold is effectively stretched in the circumferential direction, and is sufficiently pressed from inside against the mold. Since the green tire is appropriately pressurized and heated in the mold, a tire 2 of high quality is obtained. In the manufacture of the tire 2, a forming process of the edge band 22 is added. Thus, formability of the tire 2 is slightly inferior to that of a conventional tire that does not include the edge band 22. However, if a band cord 48 that has a small elongation at break is employed in the edge band 22, it is possible to manufacture the tire 2 in which influence to productivity is suppressed to the minimum. In the tire 2, good formability is maintained. In the tire 2, the formability is ensured and improvement of uneven wear resistance is achieved.

In the tire 2, the thickness of the tread 4 at the equator PC need not be increased in order to improve uneven wear resistance. In the tire 2, the thickness T of the tread 4 at the equator PC can be set to be smaller than in a conventional tire in which the thickness of the tread at the equator PC is set to be large in order to improve uneven wear resistance. The thin tread 4 can contribute to reduction of the mass. In the tire 2, rolling resistance can be also reduced.

As described above, in the tire 2, a metal band cord 48 having a small elongation at break can be used as the band cord 48 of the edge band 22. This band cord 48 contributes to holding the end portion, of the belt 14, in the vicinity of the shoulder circumferential groove 30s. The edge band 22 including the band cord 48 having a small elongation at break effectively contributes to improvement of uneven wear resistance, particularly in a tire 2 that has a nominal aspect ratio of not greater than 65. From this viewpoint, the elongation at break of the band cord 48 is preferably not higher than 6%, more preferably not higher than 4%, and further preferably not higher than 3%. When the elongation at break of the band cord 48 is excessively small, it becomes a concern that there is an influence on the formability of the tire 2. From the viewpoint of ensuring formability, the elongation at break is preferably not lower than 1%, and more preferably not lower than 2%.

The elongation at break of the band cord 48 is measured according to "Testing Methods for Steel Tire Cords" specified in JIS G3510. The elongation at break of the band cord 48 is "total elongation at break" in JIS G3510.

In the tire 2, the inner end 52 of the edge band 22 is positioned inward of an inner edge 54 of the shoulder circumferential groove 30s in the axial direction. In the tire 2, the edge band 22 sufficiently overlaps the shoulder circumferential groove 30s in the radial direction. The overlapping between the edge band 22 and the shoulder circumferential groove 30s contributes to ensuring the stiffness in the shoulder circumferential groove 30s, and thus, rising-up of the end portion of the belt 14 is effectively suppressed. In the tire 2, uneven wear resistance is improved. From this viewpoint, the inner end 52 of the edge band 22 is preferably positioned inward of the inner edge 54 of the shoulder circumferential groove 30s in the axial direction. A state in which the edge band 22 does not overlap the shoulder circumferential groove 30s in the radial direction denotes a state in which the inner end 52 of the edge band 22 is positioned outward of an outer edge 56 of the shoulder circumferential groove 30s in the axial direction.

In FIG. 2, a double-headed arrow DG represents the distance in the axial direction from the inner edge 54 of the shoulder circumferential groove 30s to the inner end 52 of the edge band 22.

In the tire 2, the distance DG is not less than 3 mm and not greater than 7 mm. Since the distance DG is set to be not less than 3 mm, the edge band 22 effectively suppresses rising-up of the end portion of the belt 14 outward in the radial direction in a running state. From this viewpoint, the distance DG is preferably not less than 4 mm. Since the distance DG is set to be not greater than 7 mm, influence of the edge band 22 to the formability of the tire 2 is suppressed. From this viewpoint, the distance DG is preferably not greater than 6 mm.

In the tire 2, an outer end 58 of the edge band 22 is positioned inward of the end 42B of the second layer 40B in the axial direction. In the tire 2, the position of the outer end 58 of the edge band 22 relative to the end 42B of the second layer 40B is not particularly limited. The outer end 58 of the edge band 22 may be positioned outward of the end 42B of the second layer 40B in the axial direction. However, in this case, it becomes a concern that air remains between the outer end 58 portion of the edge band 22 and the end portion of the belt 14, thus causing defective appearance such as bareness. Therefore, it is necessary to, for example, separately prepare a rubber layer that has the same thickness as the second layer 40B, and to dispose this rubber layer so as to be in contact with the end 42B of the second layer 40B. Therefore, from a viewpoint of effectively suppressing air from remaining without the need of adding a new member, it is preferable, in the tire 2, that the outer end 58 of the edge band 22 is positioned inward of the end 42B of the second layer 40B in the axial direction.

In FIG. 2, a double-headed arrow DE represents the distance in the axial direction from the end 42B of the second layer 40B to the outer end 58 of the edge band 22.

In the tire 2, the distance DE is preferably not less than 3 mm and preferably not greater than 7 mm. When the distance DE is set to be not less than 3 mm, remaining of air at the end portion of the belt 14 due to the edge band 22 is suppressed. In the tire 2, good formability is maintained. From this viewpoint, the distance DE is more preferably not less than 4 mm. When the distance DE is set to be not greater than 7 mm, the edge band 22 effectively suppresses rising-up of the end portion of the belt 14 outward in the radial direction in a running state. From this viewpoint, the distance DE is more preferably not greater than 6 mm.

As described above, in the tire 2, the edge member 46 is present between the end portion of the second layer 40B and the end portion of the third layer 40C. The edge member 46 suppresses increase in the ground-contact pressure caused by the end portion of the third layer 40C coming close to the tread surface 24. The edge member 46 contributes to improvement of uneven wear resistance. In the tire 2, since the edge member 46 is provided between the end portion of the second layer 40B and the end portion of the third layer 40C, even if the outer end 58 of the edge band 22 is disposed inward of the end 42B of the second layer 40B in the axial direction, uneven wear resistance can be improved. In this case, air is effectively suppressed from remaining, and thus, good formability is ensured. The edge member 46 effectively contributes to achievement of ensuring formability and improvement of uneven wear resistance.

In FIG. 2, a double-headed arrow Y represents the thickness of the edge member 46. The thickness Y of the edge member 46 is represented by the distance from the end 42B of the second layer 40B to the third layer 40C. This distance is measured along the normal line of the outer surface of the third layer 40C.

In the tire 2, increase in the ground-contact pressure caused by the end portion of the third layer 40C coming close to the tread surface 24 is suppressed. From a viewpoint of allowing improvement of uneven wear resistance, the thickness Y of the edge member 46 is preferably not less than 2.5 mm, and more preferably not less than 3.0 mm. From a viewpoint that the edge member 46 allows the end portion of the second layer 40B to be disposed at an appropriate position relative to the end portion of the third layer 40C, so that strain concentration to the end portion of the second layer 40B is effectively suppressed, the thickness Y of the edge member 46 is preferably not greater than 5.0 mm, and more preferably not greater than 4.5 mm.

As is apparent from the description above, according to the present invention, the heavy duty pneumatic tire 2 in which formability is ensured and uneven wear resistance is improved can be obtained.

The embodiment disclosed herein is in all aspects illustrative and not restrictive. The technological scope of the present invention is not limited to the embodiment described above, and includes all modifications within a scope equivalent to the configurations described in the scope of the claims.

### [EXAMPLES]

The present invention will be described in more detail by means of examples below. However, the present invention is not limited only to these examples.

### [Example 1]

A heavy duty pneumatic tire (tire size = 385/55R22.5) having the fundamental structure shown in FIGS. 1 and 2 and having specifications indicated in Table 1 was obtained. In Table 1, that the first layer is provided is indicated as "Y" in the cell for "First layer", that the edge band is employed is indicated as "E" in the cell for "Band", and that the edge band overlaps the shoulder circumferential groove in the radial direction is indicated as "Y" in the cell for "Overlap".

In Example 1, the distance DG in the axial direction from the inner edge of the shoulder circumferential groove to the inner end of the edge band was 5 mm. The distance DE in the axial direction from the end of the second layer to the outer end of the edge band was 5 mm.

In Example 1, a steel cord was used as the metal band cord of the edge band. The elongation at break of this steel cord was 3.0%.

In Example 1, the thickness T of the tread at the equator PC was set to be smaller than that of the tire of Comparative Example 1 described later. This is indicated as an index, with the tread thickness T in Comparative Example 1 being assumed to be 100, in the cell for "T" in Table 1.

### [Comparative Example 1]

A tire of Comparative Example 1 is a conventional tire. In Comparative Example 1, the edge band is not provided. In Comparative Example 1, from the viewpoint of improving uneven wear resistance, the thickness T of the tread at the equator PC is set to be large. The structure of the belt of Comparative Example 1 is the same as the structure of the belt of Example 1.

### [Comparative Example 2]

A tire of Comparative Example 2 was obtained in the same manner as in Comparative Example 1 except that the thickness T of the tread at the equator PC was set to be the same as that in Example 1.

### [Examples 2 to 5]

Tires of Examples 2 to 5 were each obtained in the same manner as in Example 1 except that the elongation at break of the steel cord was set as indicated in Table 1 below.

### [Comparative Example 3]

A tire of Comparative Example 3 was obtained in the same manner as in Example 1 except that the inner end of the edge band was disposed outward of the outer edge of the shoulder circumferential groove in the axial direction. In Comparative Example 3, the distance in the axial direction from the outer edge of the shoulder circumferential groove to the inner end of the edge band was set to 5 mm. The edge band and the shoulder circumferential groove do not overlap each other in the radial direction. This is indicated as "N" in the cell for "Overlap" in Table 1.

### [Comparative Example 4]

A tire of Comparative Example 4 was obtained in the same manner as in Example 1 except that the belt was composed of three layers of the second layer, the third layer, and the fourth layer, without the first layer being provided, and a full band was employed instead of the edge band. That the full band was employed is indicated as "F" in the cell for "Band" in Table 1, and that the first layer is not provided is indicated as "N" in the cell for "First layer" in Table 1.

### [Uneven wear resistance]

Each sample tire was mounted to the normal rim and inflated with air, and the internal pressure of the tire was adjusted to the normal internal pressure. The tire was caused to run 1000 km at a speed of 80 km/h on a drum tester, and the state of occurrence of uneven wear was confirmed. The result is shown as an index in Table 1 below. A greater value indicates that occurrence of uneven wear is more suppressed, which means that the tire is excellent in uneven wear resistance. In the running test, a load of 85% of the normal load was applied to the tire.

### [Formability]

The time required for forming a green tire (also referred to as a raw cover) was measured. The result is indicated as an index in Table 1 below. A greater value indicates that the forming time is short, which means that formability is excellent. Since the forming process of the edge band is included, formability could be reduced when compared with a tire not provided with the edge band. This was taken into consideration, and the target of the index representing the formability was set to be not less than 90.

### [Overall evaluation]

The sum of indexes obtained in the respective evaluations was obtained. The result is shown as an overall evaluation in Table 1 below. A greater value is preferable.

**[Table 1]**

| | Comp. Ex. 1 | Comp. Ex. 2 | Ex. 2 | Ex. 3 | Ex. 1 | Ex. 4 | Ex. 5 | Comp. Ex. 3 | Comp. Ex. 4 |
|---|---|---|---|---|---|---|---|---|---|
| Structure | - | - | FIG. 2 | FIG. 2 | FIG. 2 | FIG. 2 | FIG. 2 | FIG. 2 | - |
| T [-] | 100 | 90 | 90 | 90 | 90 | 90 | 90 | 90 | 90 |
| Band | - | - | E | E | E | E | E | E | F |
| Overlap | - | - | Y | Y | Y | Y | Y | N | Y |
| DG [mm] | - | - | 5 | 5 | 5 | 5 | 5 | - | - |
| Elongation at break [%] | - | - | 0.5 | 1.5 | 3.0 | 4.0 | 7.0 | 3.0 | 3.0 |
| First layer | Y | Y | Y | Y | Y | Y | Y | Y | N |
| Uneven wear resistance | 100 | 80 | 120 | 120 | 120 | 110 | 105 | 100 | 100 |
| Formability | 100 | 100 | 90 | 95 | 95 | 95 | 100 | 95 | 90 |
| Overall evaluation | 200 | 180 | 210 | 215 | 215 | 205 | 205 | 195 | 190 |

As indicated in Table 1, in Examples, formability is ensured and uneven wear resistance is improved. From the evaluation results, advantages of the present invention are clear.

The above-described technology of ensuring formability and improving uneven wear resistance can be applied to various tires.

## Claims

1. A heavy duty pneumatic tire (2) having a nominal aspect ratio of not greater than 65, the heavy duty pneumatic tire (2) comprising:
a tread (4) having not less than three circumferential grooves (30, 30c, 30s) aligned with each other in an axial direction;
a belt (14) positioned inward of the tread (4) in a radial direction and including a large number of belt cords made of metal, the belt cords being aligned with each other; and
a pair of edge bands (22), each edge band (22) being positioned between the tread (4) and the belt (14) in the radial direction and including a band cord (48) made of metal, wherein
of the not less than three circumferential grooves (30, 30c, 30s), circumferential grooves (30s) that are positioned on outer sides in the axial direction are each a shoulder circumferential groove (30s),
the belt (14) is composed of a plurality of layers (40, 40A, 40B, 40C, 40D) layered in the radial direction, a layer (40A), out of the layers (40, 40A, 40B, 40C, 40D), that is close to the tread (4) is a first layer (40A), and a layer (40B), out of the layers (40, 40A, 40B, 40C, 40D), that is positioned inward of the first layer (40A) in the radial direction is a second layer (40B),
each shoulder circumferential groove (30s) is positioned between an end (42A) of the first layer (40A) and an end (42B) of the second layer (40B) in the axial direction,
the edge band (22) is layered on an end portion (42B) of the second layer (40B),
an inner end (52) of the edge band (22) is positioned outward of the end (42A) of the first layer (40A) in the axial direction and inward of an inner edge (54) of the shoulder circumferential groove (30s) in the axial direction, and
the edge band (22) overlaps the shoulder circumferential groove (30s) in the radial direction,
**characterized in that** the band cord (48) is helically wound and **in that** a distance (DG) in the axial direction from the inner edge (54) of the shoulder circumferential groove (30s) to the inner end (52) of the edge band (22) is between 3 mm and 7 mm.

2. The heavy duty pneumatic tire (2) according to claim 1, wherein
an elongation at break of the band cord (48) is not lower than 1% and not higher than 6%.

3. The heavy duty pneumatic tire (2) according to claim 1 or 2, wherein
an outer end (58) of the edge band (22) is positioned inward of the end (42B) of the second layer (40B) in the axial direction.

4. The heavy duty pneumatic tire (2) according to any of claims 1 to 3, wherein
the heavy duty pneumatic tire (2) further comprises edge members (46), each edge member (46) being composed of four rubber layers (44), wherein the end portion (42B) of the second layer (40B) and an end portion (42C) of a third layer (40C) are each covered with one of the rubber layers (44), and wherein two rubber layers (44) are disposed between the end portion (42B) of the second layer (40B) and the end portion (42C) of the third layer (40C).

## Patentansprüche

1. Schwerlast-Luftreifen (2) mit einem Nennquerschnittsverhältnis von nicht mehr als 65, wobei der Schwerlast-Luftreifen (2) umfasst:
eine Lauffläche (4) mit nicht weniger als drei Umfangsrillen (30, 30c, 30s), die in einer axialen Richtung zueinander ausgerichtet sind;
einen Gürtel (14), der in einer radialen Richtung innen von der Lauffläche (4) angeordnet ist und eine große Anzahl von aus Metall bestehenden Gürtelkorden aufweist, wobei die Gürtelkorde miteinander ausgerichtet sind; und
ein Paar Randbänder (22), wobei jedes Randband (22) in der radialen Richtung zwischen der Lauffläche (4) und dem Gürtel (14) angeordnet ist und einen aus Metall bestehenden Bandkord (48) aufweist, wobei
von den nicht weniger als drei Umfangsrillen (30, 30c, 30s) Umfangsrillen (30s), die an Außenseiten in der axialen Richtung angeordnet sind, jeweils eine Schulterumfangsrille (30s) sind,
der Gürtel (14) aus einer Vielzahl von in der radialen Richtung geschichteten Lagen (40, 40A, 40B, 40C, 40D) zusammengesetzt ist, wobei ein
e Lage (40A) aus den Lagen (40, 40A, 40B, 40C, 40D), die sich nahe der Lauffläche (4) befindet, eine erste Lage (40A) ist, und eine Lage (40B) aus den Lagen (40, 40A, 40B, 40C, 40D), die in der radialen Richtung innen von der ersten Lage (40A) angeordnet ist, eine zweite Lage (40B) ist,
jede Schulterumfangsrille (30s) zwischen einem Ende (42A) der ersten Schicht (40A) und einem Ende (42B) der zweiten Schicht (40B) in der axialen Richtung angeordnet ist,
das Randband (22) auf einen Endabschnitt (42B) der zweiten Schicht (40B) geschichtet ist,
ein inneres Ende (52) des Randbandes (22) in der axialen Richtung außen von dem Ende (42A) der ersten Schicht (40A) und in der axialen Richtung innen von einer Innenkante (54) der Schulterumfangsrille (30s) positioniert ist, und
das Randband (22) die Schulterumfangsrille (30s) in der radialen Richtung überlappt,
**dadurch gekennzeichnet, dass** der Bandkord (48) schraubenförmig gewickelt ist und dass ein Abstand (DG) in der axialen Richtung von der Innenkante (54) der Schulterumfangsrille (30s) zu dem inneren Ende (52) des Randbandes (22) zwischen 3 mm und 7 mm beträgt.

2. Schwerlast-Luftreifen (2) nach Anspruch 1, wobei eine Bruchdehnung des Bandkords (48) nicht kleiner als 1 % und nicht größer als 6 % ist.

3. Schwerlast-Luftreifen (2) nach Anspruch 1 oder 2, wobei ein äußeres Ende (58) des Randbandes (22) in der axialen Richtung innen von dem Ende (42B) der zweiten Schicht (40B) angeordnet ist.

4. Schwerlast-Luftreifen (2) nach einem der Ansprüche 1 bis 3, wobei der Schwerlast-Luftreifen (2) weiterhin Randelemente (46) umfasst, wobei jedes Randelement (46) aus vier Gummischichten (44) zusammengesetzt ist, wobei der Endabschnitt (42B) der zweiten Schicht (40B) und ein Endabschnitt (42C) einer dritten Schicht (40C) jeweils mit einer der Gummischichten (44) bedeckt sind, und wobei zwei Gummischichten (44) zwischen dem Endabschnitt (42B) der zweiten Schicht (40B) und dem Endabschnitt (42C) der dritten Schicht (40C) angeordnet sind.

## Revendications

1. Bandage pneumatique pour poids lourd (2) ayant un rapport d'aspect nominal qui n'est pas supérieur à 65, le bandage pneumatique pour poids lourd (2) comprenant :
une bande de roulement (4) n'ayant pas moins de trois rainures circonférentielles (30, 30c, 30s) alignées les unes avec les autres dans une direction axiale ;
une ceinture (14) positionnée à l'intérieur de la bande de roulement (4) dans une direction radiale et incluant un grand nombre de câblés de ceinture faits en métal, les câblés de ceinture étant alignés les uns avec les autres ; et
une paire de bandes de bord (22), chaque bande de bord (22) étant positionnée entre la bande de roulement (4) et la ceinture (14) dans la direction radiale et incluant un câblé de bande (48) fait en métal, dans lequel
parmi les pas moins de trois rainures circonférentielles (30, 30c, 30s), des rainures circonférentielles (30s) qui sont positionnées sur des côtés extérieurs dans la direction axiale sont chacune une rainure circonférentielle d'épaulement (30s),
la ceinture (14) est composée d'une pluralité de couches (40, 40A, 40B, 40C, 40D) superposées dans la direction radiale, une couche (40A), parmi les couches (40, 40A, 40B, 40C, 40D), qui est proche de la bande de roulement (4) est une première couche (40A), et une couche (40B), parmi les couches (40, 40A, 40B, 40C, 40D), qui est positionnée à l'intérieur de la première couche (40A) dans la direction radiale est une deuxième couche (40B),
chaque rainure circonférentielle d'épaulement (30s) est positionnée entre une extrémité (42A) de la première couche (40A) et une extrémité (42B) de la deuxième couche (40B) dans la direction axiale,
la bande de bord (22) est superposée sur une portion d'extrémité (42B) de la deuxième couche (40B),
une extrémité intérieure (52) de la bord de bande (22) est positionnée à l'extérieur de l'extrémité (42A) de la première couche (40A) la direction axiale et à l'intérieur d'un bord intérieur (54) de la rainure circonférentielle d'épaulement (30s) dans la direction axiale, et
la bande de bord (22) se chevauchent avec la rainure circonférentielle d'épaulement (30s) dans la direction radiale,
**caractérisé en ce que** le câblé de bande (48) est enroulé de manière hélicoïdale et **en ce qu'**une distance (DG) dans la direction axiale depuis le bord intérieur (54) de la rainure circonférentielle d'épaulement (30s) jusqu'à l'extrémité intérieure (52) de la bande de bord (22) est entre 3 mm et 7 mm.

2. Bandage pneumatique pour poids lourd (2) selon la revendication 1, dans lequel
un allongement à la rupture du câblé de bande (48) n'est pas inférieur à 1 % et n'est pas supérieur à 6 %.

3. Bandage pneumatique pour poids lourd (2) selon la revendication 1 ou 2, dans lequel
une extrémité extérieure (58) de la bande de bord (22) est positionnée à l'intérieur de l'extrémité (42B) de la deuxième couche (40B) dans la direction axiale.

4. Bandage pneumatique pour poids lourd (2) selon l'une quelconque des revendications 1 à 3, dans lequel
le bandage pneumatique pour poids lourd (2) comprend en outre des éléments de bord (46), chaque élément de bord (46) étant composé de quatre couches en caoutchouc (44), dans lequel la portion d'extrémité (42B) de la deuxième couche (40B) et une portion d'extrémité (42C) d'une troisième couche (40C) sont chacune couvertes avec une des couches en caoutchouc (44), et dans lequel deux couches en caoutchouc (44) sont disposées entre la portion d'extrémité (42B) de la deuxième couche (40B) et la portion d'extrémité (42C) de la troisième couche (40C).
